# EUROPÄISCHE PATENTSCHRIFT

(11) **EP 3 245 538 B1**
(45) Veröffentlichungstag und Bekanntmachung des Hinweises auf die Patenterteilung: **02.08.2023**
(21) Anmeldenummer: 15807802.2
(22) Anmeldetag: 05.12.2015
(51) Int. Cl.: G01S 7/41, B60R 21/0134, G01S 13/42, G01S 13/931, G01S 13/58, G01S 13/87, G01S 13/86, B60R 19/26

(54) **VERFAHREN ZUM BETRIEB EINES SICHERHEITSSYSTEMS EINES KRAFTFAHRZEUGS UND KRAFTFAHRZEUG**
METHOD FOR OPERATING A SAFETY SYSTEM OF A MOTOR VEHICLE, AND MOTOR VEHICLE
PROCÉDÉ DE FONCTIONNEMENT D'UN SYSTÈME DE SÉCURITÉ D'UN VÉHICULE AUTOMOBILE ET VEHICULE AUTOMOBILE

(30) Priorität: 13.01.2015 DE 102015000426
(43) Veröffentlichungstag der Anmeldung: 22.11.2017
(73) Patentinhaber: Audi AG, 85045 Ingolstadt (DE)
(72) Erfinder: KHLIFI, Rachid, 85748 Garching (DE)
(74) Vertreter: Herbst, Matthias Heinz
(86) Internationale Anmeldenummer: PCT/EP2015/002453
(87) Internationale Veröffentlichungsnummer: WO 2016/112938

(56) Entgegenhaltungen:
- EP-A1- 2 360 065
- WO-A1-2014/049088
- DE-A1-102009 046 057
- JP-A- 2003 226 211
- US-A1- 2009 289 471
- US-A1- 2010 108 424
- US-A1- 2013 261 869
- JRI LEE ET AL: "A Fully-Integrated 77-GHz FMCW Radar Transceiver in 65-nm CMOS Technology", IEEE JOURNAL OF SOLID-STATE CIRCUITS, Bd. 45, Nr. 12, 1. Dezember 2010 (2010-12-01), Seiten 2746-2756, XP055088008, ISSN: 0018-9200, DOI: 10.1109/JSSC.2010.2075250

## Beschreibung

Die Erfindung betrifft ein Verfahren zum Betrieb eines Sicherheitssystems eines Kraftfahrzeugs mit wenigstens einer adaptiven, zur Energieaufnahme bei einer Kollision ausgebildeten Crashstruktur, wobei im Vorfeld einer detektierten, bevorstehenden Kollision Sensordaten wenigstens eines Umgebungssensors des Kraftfahrzeugs zur Ermittlung einer die Kollision beschreibenden Kollisionsinformation ausgewertet werden und die wenigstens eine Crashstruktur in Abhängigkeit von der Kollisionsinformation eingestellt wird, wobei das Verfahren die Merkmale des Anspruchs 1 umfasst. Daneben betrifft die Erfindung ein Kraftfahrzeug wie im Anspruch 9 definiert.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Ein häufiges Einsatzgebiet von Radarsensoren in Kraftfahrzeugen liegt im Rahmen der Kollisionsvermeidung und/oder Kollisionsfolgenminderung durch Sicherheitssysteme. Radarsensoren eignen sich besonders für die Erfassung dynamischer Objekte im Umfeld, so dass es heute bekannten Sicherheitssystemen unter Verwendung von Radardaten möglich ist, mögliche und unausweichliche Kollisionen vorauszuberechnen und Maßnahmen zur Kollisionsvermeidung und/oder Kollisionsfolgenminderung einzuleiten. Anwendungen, die aufgrund von Sensordaten von Umgebungssensoren, insbesondere Radarsensoren, bereits vor Eintritt einer Kollision weitere Fahrzeugsysteme, beispielsweise Airbags und/oder sonstige Insassenrückhaltesysteme, ansteuern können, sind auch als Precrash-Funktionen bekannt. Dabei fokussieren sich die bekannten Precrash-Funktionen meist auf die Vorbereitung und/oder Auslösung von Insassenrückhaltesystemen, insbesondere von Airbags, um einen rechtzeitigen Schutz der Insassen des Kraftfahrzeugs zu erreichen.

Zur Kollisionsfolgenminderung beziehungsweise zum Schutz der Insassen wurde auch bereits vorgeschlagen, im Kraftfahrzeug, insbesondere in der Karosserie verbaut, sogenannte Crashstrukturen vorzusehen. Dabei handelt es sich um meist zusätzlich vorliegende Elemente, die beispielsweise zwischen Längs- und Querträgern der Karosserie des Kraftfahrzeugs angeordnet werden können und die ausgebildet sind, sich im Fall einer Kollision zu deformieren und hierbei Kollisionsenergie aufzunehmen und somit zu vernichten. Mithin umfassen Crashstrukturen meist wenigstens ein Deformationselement, welches sich bei Eintritt einer Kollision unter Energieaufnahme verformt. Derartige Crashstrukturen wurden auch bereits adaptiv vorgeschlagen, das bedeutet, die Energieaufnahme und die Steifigkeit der Crashstruktur, insbesondere des Deformationselements, lässt sich in einem bestimmten Rahmen, beispielsweise stufenweise, einstellen. So wurde beispielsweise in DE 197 45 656 A1 als Crashstruktur ein Pralldämpfer für ein Kraftfahrzeug vorgeschlagen, in dessen Weg ein Sperrteil hineinragt, welches in verschiedene Positionen bringbar ist, in denen der Deformationskörper durch die Krafteinwirkung beim Aufprall weniger oder mehr plastisch verformt wird. Auf diese oder eine ähnliche Art ist mithin eine Adaption auf einen konkreten Kollisionsvorgang möglich.

Die Adaption von Crashstrukturen ist dabei meist in Abhängigkeit der Daten von Kollisionssensoren, meist von Beschleunigungssensoren, bekannt, die beim tatsächlichen Eintritt der Kollision anschlagen.

Eine Vorrichtung und ein Verfahren zum adaptiven Abbau von Crashenergie werden auch durch DE 10 2010 001 926 A1 offenbart. Dort wird ein Steuersignal zur Anpassung einer Energieabbaufähigkeit von mindestens einem im Crashfall deformierbaren Deformationselement einer adaptiven Crashstruktur in Abhängigkeit von crashrelevanten Informationen ermittelt, wobei auch Umfeldsensoren, wie beispielsweise Radarsensoren, verwendet werden können, um das Auslöseverhalten der adaptiven Crashstruktur durch schon vor dem Crash ermittelte Informationen zu verbessern.

Die Adaption der Crashstrukturen erfolgt in diesen Fällen also erst dann, wenn durch Kollisionssensoren das tatsächliche Stattfinden der Kollision detektiert wurde. Zum anderen wird die Anpassung der Strukturen im Hinblick auf die Energieabbaufähigkeit nur abhängig von der Art des Kollisionsobjekts, mit dem das eigene Kraftfahrzeug kollidiert, eingestellt, so dass beispielsweise für eine Kollision mit einem Fußgänger eine maximale Weichheit eingestellt wird, für die Kollision mit einem anderen Kraftfahrzeug jedoch eine maximale Steifigkeit für den größtmöglichen Schutz der Insassen.

JP 2003 226 211 A offenbart eine Sicherheitseinrichtung für ein Fahrzeug mit einer Objekterfassungseinheit, die ein Millimeterwellen-Radar aufweisen kann. Die Objekterfassungseinheit misst die Bewegungsgeschwindigkeit und die Höhe eines kollidierenden Objekts, um die Relativposition zwischen dem Fahrzeug und dem kollidierenden Objekt zu ermitteln. Handelt es sich bei dem Objekt um einen Fußgänger, einen Radfahrer oder ein Motorradfahrer, wird auch dessen Orientierung erfasst.

US 2013/0261869 A1 betrifft ein Verfahren zum Betrieb eines Sicherheitssystems eines Kraftfahrzeugs, wobei bei einer unvermeidlichen Kollision durch das Sicherheitssystem eine einer im Hinblick auf eine Zweitkollision sicheren Zielstellung zugeordnete, nach der Kollision zu realisierende Zieltrajektorie des Kraftfahrzeugs ermittelt wird und wenigstens ein autonomer und/oder unterstützender Fahreingriff zur Realisierung der Zieltrajektorie vorgenommen wird. Diese Zieltrajektorie kann auch die Ansteuerung wenigstens eines Fahrzeugsystems bei einer der Zweitkollision vorausgehenden Erstkollision beeinflussen.

US 2010/0108424 A1 offenbart eine Fahrzeugsicherheitseinrichtung, die verschoben wird, wenn sie eine Kollisionskraft aufnimmt, wodurch die Kollisionsenergie eines Kollisionsgegenstands absorbiert wird, umfassend eine Aufprallabsorptionseinheit, die ein Verschiebungsgebiet erzeugen kann, so dass eine Zunahme einer Stützkraft eine Zunahme einer Verschiebung in Richtung der Kollision dämpft.

US 2009/0289471 A1 offenbart ein Sicherheitssystem für ein Fahrzeug mit einer Energieabsorptionsstruktur, deren Bewegung von einer Sensoreinrichtung ausgelöst werden kann. Die Energieabsorptionsstruktur fährt vor einer Kollision in Richtung des Kollisionsobjekts aus und entfaltet ein Element, das das Kollisionsobjekt auf die Motorhaube stößt, wo es auf einen Airbag aufschlägt.

EP 2 360 065 A1 betrifft ein Crashboxsystem mit zwei Crashboxen, deren Steifigkeit mittels einer Vorrichtung einstellbar ist. Das Crashboxsystem weist ferner mehrere Sensorsysteme zur Erkennung eines Crashs und zur Ermittlung der Crashschwere sowie eine Auswerte- und/oder Steuereinheit zum Auswerten von Signalen der Sensorsysteme und zur Erzeugung von Steuersignalen zur Ansteuerung von Aktuatoren der Vorrichtung auf. Ein Sensorsystem ist eine Precrash-Sensorik, die ein Radar-System umfasst. Die Crash-Sensorik erkennt einen bevorstehenden Crash und stellt die Größe und die Masse eines Aufprallobjekts fest. Die Auswerte- und/oder Steuereinheit beurteilt die Stärke des Crashs anhand eines erkannten Objekts, der Relativgeschwindigkeit des Fahrzeugs und/oder des Crashtyps.

DE 10 2009 046 057 A1 offenbart ein Verfahren zu Anpassung der Steifigkeit eines irreversiblen Pralldämpfers eines Fahrzeugs nach einem Aufprall eines Objektes auf das Fahrzeug. Die Ansteuerung des Pralldämpfers erfolgt dabei nach dem Aufprall des Objekts auf das Fahrzeug, wobei zur Vermeidung einer Fehlauslösung eine Plausibilisierung zwischen einem ersten Steuersignal eines dem Pralldämpfer zugeordneten Pralldämpfersensors sowie eines vorausschauenden Sensors, welcher beispielsweise als Radarsensor ausgestaltet sein kann, eingesetzt wird. Der Radarsensor dient dabei dazu, bei Herannahen eines Objekts die Größe und/oder die Klasse dieses Objekts abzuschätzen.

WO 2014/049088 A1 betrifft ein auf Halbleiterbasis ausgebildetes Radarmodul. Das Radarmodul umfasst eine Antennenanordnung zum Senden und Empfangen. Ein dielektrischer Abstand zwischen der Antennenanordnung und einer leitfähigen Schicht, die die Signalmassebene bildet, umfasst wenigstens eine dielektrische Schicht eine integrierten Halbleiterschaltkreises und ist so ausgebildet, dass ein den dielektrischen Abstand durchquerendes Signal eine Phasenverschiebung zwischen 60 und 120 Grad erhält.

Der Erfindung liegt daher die Aufgabe zugrunde, eine Möglichkeit zur frühzeitigen und verbesserten Ansteuerung adaptiver Crashstrukturen im Vorfeld einer detektierten, bevorstehenden Kollision anzugeben.

Zur Lösung dieser Aufgabe sind bei einem Verfahren der eingangs genannten Art erfindungsgemäß die Merkmale des Anspruchs 1 vorgesehen.

Diese so ermittelte Kollisionsinformation geht mithin in die Anpassung beziehungsweise Einstellung der Crashstruktur ein, so dass ein ideales, die Insassen des Kraftfahrzeugs und/oder Personen als das und/oder in dem Kollisionsobjekt optimal schützt. Es wird ausgenutzt, dass inzwischen hochintegrierte, hochauflösende Radarsensoren bekannt wurden, insbesondere im Bereich der RF-CMOS-Technologie, die es erlauben, die Performance der Radartechnologie stark zu steigern. Zudem kann die Größe der Radarsensoren drastisch verkleinert werden, wie eingangs erläutert, da insbesondere alle Radarkomponenten auf einem CMOS-Chip beziehungsweise gemeinsam mit einer Antennenanordnung in einem Package integriert werden können, so dass eine bevorzugte Ausgestaltung der vorliegenden Erfindung vorsieht, dass durch den insbesondere als CMOS-Chip ausgebildeten Halbleiterchip auch eine Steuereinheit und/oder eine digitale Signalverarbeitungskomponente des Radarsensors realisiert werden und/oder der Halbleiterchip gemeinsam mit einer Antennenanordnung des Radarsensors in einem Package realisiert ist. Auf diese Weise lassen sich Radarsensoren schaffen, die eine äußerst kleine Ausdehnung aufweisen, beispielsweise kleiner als 3 cm x 3 cm, und kurze Signalwege realisieren, was das Signal-zu-Rauschverhältnis erhöht. Im Vergleich zu SiGe-Technologien benötigen auf RF-CMOS-Technologie basierende Radarsensoren zudem weniger Betriebsstrom.

Die hochaufgelöste Detektion bewegter Objekte mittels der hochintegrierten Radartechnologie liefert äußerst genaue Erkenntnisse über Objekte in der Umgebung des Kraftfahrzeugs, insbesondere also auch das Kollisionsobjekt. So erlauben die Sensordaten des wenigstens einen Radarsensors eine hervorragende Abschätzung von Breite, Länge und Höhe der Objekte in der Umgebung des Kraftfahrzeugs, also insbesondere die Objektgröße, wobei sich auch die Objektform und die Objektorientierung relativ zum eigenen Kraftfahrzeug hervorragend bestimmen lassen.

Derartige Objektinformationen erlauben es gemeinsam mit sonstigen, meist bereits zur Detektion der Kollision an sich genutzten Umfelddaten und Egodaten, die Kollision deutlich genauer vorauszuberechnen. So kann der Auftreffbereich des Kollisionsobjekts auf dem eigenen Kraftfahrzeug genauso relativ genau bestimmt werden wie die Auftreffart, insbesondere also, welche Form der auftreffende Anteil des Kollisionsobjekts hat und/oder ob es sich um eine eher flächige oder eine eher punktuelle Kollision handeln wird. In diesem Zusammenhang werden mithin zweckmäßigerweise ergänzend bereits bekannte Technologien eingesetzt, die beispielsweise im Rahmen der Ermittlung von Kollisionswahrscheinlichkeiten und dergleichen genutzt werden. Hierbei werden Trajektorien von Objekten im Umfeld des Kraftfahrzeugs sowie des eigenen Kraftfahrzeugs vorausberechnet und es wird überprüft, ob es zu einer Kollision kommt beziehungsweise ob die Kollision unvermeidbar sein wird. Je näher die Kollision rückt, desto genauer kann die Trajektorie des Kollisionsobjekts, mit dem das eigene Kraftfahrzeug kollidiert, vorhergesagt werden. Hierbei werden neben Egodaten, die das eigene Kraftfahrzeug und dessen Bewegung beschreiben, meist auch die aktuelle Geschwindigkeit, der Abstand und die Bewegungsrichtung des Kollisionsobjekts berücksichtigt, welche im vorliegenden Verfahren besonders zweckmäßig auch aus den hochaufgelösten Sensordaten des Radarsensors ermittelt werden können. Es kann mithin vorgesehen sein, dass unter Berücksichtigung der Sensordaten des Radarsensors ferner eine aktuelle Geschwindigkeit und/oder ein Abstand und/oder eine Bewegungsrichtung des Kollisionsobjekts ermittelt werden, welche ebenso bei der Ermittlung der Kollisionsinformation berücksichtigt werden.

Allgemein werden also unter Nutzung der aufgrund der neu verfügbaren Radartechnologien vorhandenen weiteren Objektinformationen über das Kollisionsobjekt bislang bereits eingesetzte Berechnungstechniken zur Vorausberechnung von Kollisionen verfeinert, um den Auftreffbereich und/oder die Auftreffart ebenso vorzubestimmen und als Kollisionsinformation zu nutzen. Ist eine Kollision unvermeidbar, werden die Crashstrukturen im kalkulierten Kollisionsbereich des eigenen Kraftfahrzeugs aktiviert beziehungsweise auf die Kollision vorbereitet, um so die Kollisionsenergie geeignet zu reduzieren und die Unfallschwere stark zu reduzieren. Insbesondere bezieht sich die Adaption dabei auf die durch die Crashstruktur aufnehmbare Kollisionsenergie, mit anderen Worten mithin auf die dort vorliegende Steifigkeit. Nachdem bekannt ist, wie und wo das Kollisionsobjekt das eigene Kraftfahrzeug treffen wird, lässt sich durch entsprechende Anpassungen der Crashstrukturen eine deutlich verbesserte Kollisionsfolgenminderung, insbesondere hinsichtlich des Schutzes von Insassen des eigenen Kraftfahrzeugs und des Kollisionsobjekts, erreichen. Wird beispielsweise festgestellt, dass die Kollision im vorderen Bereich des Kraftfahrzeugs mit Richtung auf das vordere Ende desselben stattfinden wird, werden die betroffenen Crashstrukturen eher weich geschaltet werden; richtet sich die Kollision punktuell in Richtung des Innenraums des Kraftfahrzeugs, wird mit steiferen Crashstrukturen gearbeitet. Optimale Einstellungen für die Crashstrukturen können dabei wenigstens teilweise vorberechnet und/oder in Versuchen ermittelt sein, es ist jedoch auch denkbar, in Echtzeit optimale, die Kollisionsfolgen für beteiligte Personen minimierende Einstellungen für die Crashstrukturen in Abhängigkeit der Kollisionsinformation zu berechnen.

Die Verwendung insbesondere miniaturisierter, in CMOS-Technologie hergestellter Radarsensoren bietet im Übrigen den weiteren Vorteil, dass der Verbau im Kraftfahrzeug vereinfacht wird. So ist es beispielsweise möglich, Radarsensoren verdeckt in Stoßfängern und/oder Türen und/oder an anderen Orten der Karosserie zu realisieren, wenn ein beispielsweise durch Lackierung unsichtbares, geeignetes Strahlenaustrittsfenster vorbereitet wird, falls der Radarsensor hinter einem Karosserieabschnitt integriert werden soll.

Eine zweckmäßige Ausgestaltung der vorliegenden Erfindung sieht vor, dass der Radarsensor mit einer Frequenzbandbreite von mehr als 1 GHz, insbesondere 4 GHz, und/oder in einem Frequenzbereich von 77 bis 81 GHz und/oder mit einer Zykluszeit, die kleiner als 40 ms ist, betrieben wird. Die Verwendung großer Frequenzbandbreiten, beispielsweise von 4 GHz, erlaubt eine verbesserte Abstandsauflösung zwischen einzelnen Reflektionen, mithin insgesamt eine höhere Auflösung der Radarsensoren, so dass letztlich die detektierten Reflexionen sehr nahe beieinander auf dem Kollisionsobjekt verteilt sind, was die Angabe der Form, insbesondere Kontur, der Kollisionsobjekte (und auch sonstiger Objekte im Umfeld des Kraftfahrzeugs) ermöglicht. Hochintegrierte Radarsensoren in Halbleitertechnologie, insbesondere CMOS-Technologie, erlauben zudem äußerst geringe Zykluszeiten, beispielsweise 40 ms, was diese Radartechnologie für die hochdynamische Detektion von bewegten Objekten besonders geeignet macht.

Vorteilhafterweise können mehrere, das gesamte Umfeld des Kraftfahrzeugs in einem 360°-Winkelbereich abdeckende Radarsensoren verwendet werden. So ist es beispielsweise denkbar, acht Radarsensoren einzusetzen, von denen jeweils drei im vorderen und hinteren Stoßfänger des Kraftfahrzeugs verbaut sind und zwei seitliche Radarsensoren beispielsweise in den Türen des Kraftfahrzeugs vorgesehen sein können. Nachdem es sich um Weitwinkel-Radarsensoren handelt, ist damit bereits eine 360°-Umfelderfassung von statischen und dynamischen Objekten möglich.

In diesem Zusammenhang ist es äußerst zweckmäßig, wenn die Erfassungsbereiche der Radarsensoren wenigstens teilweise überlappen, wobei die Sensordaten mehrerer Radarsensoren in Überlappungsbereichen zur gegenseitigen Plausibilisierung und/oder Detektion von Messfehlern verwendet werden. Weisen die Radarsensoren Überlappungsbereiche in ihren Radarkeulen auf, erfolgt mithin in diesen Überlappungsbereichen eine redundante Messung. Dies erlaubt eine gegenseitige Plausibilisierung von mit mehreren Radarsensoren aufgenommenen Reflexionen und/oder die Detektion von Fehlmessungen durch Vergleiche. Hierdurch kann die Fehlerrate deutlich reduziert werden.

Zweckmäßigerweise kann allgemein ein Objekte im Umfeld des Kraftfahrzeugs beschreibendes Umfeldmodell verwendet werden. Derartige Umfeldmodelle sind im Stand der Technik bereits bekannt und werden beispielsweise durch ein Steuergerät eines sogenannten zentralen Fahrerassistenzsystems (zFAS) zur Verfügung gestellt. Letztlich stellt ein Umfeldmodell eine vorausgewertete Variante der Sensordaten dar, denen sich beispielsweise unmittelbar Objekte in der Umgebung des Kraftfahrzeugs sowie diesen zugeordnete Informationen entnehmen lassen. Auf ein derartiges Umfeldmodell kann das Sicherheitssystem beispielsweise auch bereits bei der Bestimmung einer Kollisionswahrscheinlichkeit beziehungsweise des Vorliegens einer unvermeidlichen Kollision zugreifen. Ist das Kollisionsobjekt erst identifiziert, kann unmittelbar im Umfeldmodell auf die diesbezüglichen vorausgewählten Sensordaten zugegriffen werden, gegebenenfalls auch bereits direkt auf die Objektinformationen.

Als Kollisionsinformation wird erfindungsgemäß konkret sowohl eine Kollisionsfläche und/oder eine Kollisionsrichtung als auch eine Form des kollidierenden Anteils des Kollisionsobjekts ermittelt werden.

Über die Kollisionsfläche kann mithin unterschieden werden, ob es sich um eine eher punktuelle Kollision oder eine breitflächige Kollision handelt, welche beispielsweise dann vorliegt, wenn ein anderes Kraftfahrzeug mit der kompletten Front und/oder dem kompletten Heck mit dem eigenen Kraftfahrzeug zu kollidieren droht. Auch die Kollisionsrichtung stellt eine wichtige Information dar, insbesondere dann, wenn festgestellt werden soll, wie stark Insassen des Kraftfahrzeugs gefährdet sind. Erfindungsgemäß wird auch die Form des kollidierenden Anteils des Kollisionsobjekts ermittelt, wenn beispielsweise zunächst eine punktuelle Kollision stattfindet, dann jedoch - meist mit bereits reduzierter Kollisionswahrscheinlichkeit - sich die Kollisionsfläche zunehmend verbreitert, nachdem Teile des Kollisionsobjekts in die vorherige äußere Begrenzung des Kraftfahrzeugs eindringen.

Neben dem Verfahren betrifft die Erfindung auch ein Kraftfahrzeug, aufweisend wenigstens eine adaptive Crashstruktur und ein die Crashstrukturen ansteuerndes Sicherheitssystem mit einem zur Durchführung des erfindungsgemäßen Verfahrens ausgebildeten Steuergerät. Sämtliche Ausführungen bezüglich des erfindungsgemäßen Verfahrens lassen sich analog auf das erfindungsgemäße Kraftfahrzeug übertragen, mit welchen mithin die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: eine Prinzipskizze eines Radarsensors,
- Fig. 3: eine mögliche Verteilung von Crashstrukturen innerhalb eines Kraftfahrzeugs,
- Fig. 4: ein erstes Beispiel für eine mögliche Kollision mit dem eigenen Kraftfahrzeug,
- Fig. 5: ein zweites Beispiel für eine mögliche Kollision mit dem Kraftfahrzeug, und
- Fig. 6: ein drittes Beispiel für eine Kollision mit dem erfindungsgemäßen Kraftfahrzeug.

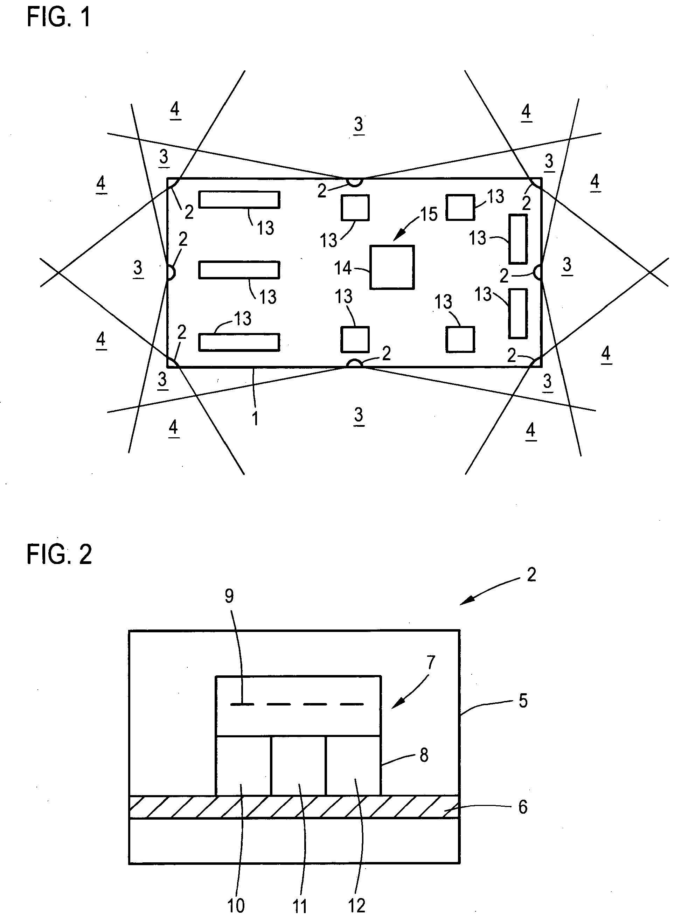

Fig. 1 zeigt eine Prinzipskizze eines erfindungsgemäßen Kraftfahrzeugs 1. Dieses weist im vorliegenden Fall acht Radarsensoren 2 auf, mit denen eine 360° Umfelderfassung um das Kraftfahrzeug möglich ist, wie durch die angedeuteten Erfassungsbereiche 3 ersichtlich wird. Die Erfassungsbereiche 3 überlappen in Überlappungsbereichen 4, in denen eine redundante Erfassung und somit Plausibilisierung/Fehlerdetektion möglich ist.

Die Radarsensoren 2 sind dabei in CMOS-Technologie äußerst kleinbauend und hochintegriert realisiert. Ein beispielhafter Aufbau eines derartigen Radarsensors 2 ist in Fig. 2 dargestellt. Dabei ist in einem Gehäuse 5 eine Leiterplatte 6 angeordnet, auf der ein Package 7 in CMOS-Technologie angeordnet ist. Das Package umfasst einen Halbleiterchip 8, hier einen CMOS-Chip, und die Antennenanordnung 9 des Radarsensors 2. Durch den Halbleiterchip werden ein Radar-Transceiver 10, eine Steuereinheit 11 und eine digitale Signalverarbeitungskomponente 12 (DSP) realisiert. Auf diese Weise sind kurze Signalwege gegeben, was zu einem hervorragenden Signal-zu-Rauschverhältnis führt.

Die Radarsensoren werden zudem in einem Frequenzbereich von 77 bis 81 GHz bei einer Bandbreite von 4 GHz betrieben, was die Ortsauflösung der Sensordaten der Radarsensoren 2 weiter verbessert. Durch die schnelle Zykluszeit, hier 40 ms, können Objekte im Umfeld des Kraftfahrzeugs 1 dynamisch erfasst werden.

Zurückkehrend zu Fig. 1 weist das Kraftfahrzeug 1 ferner adaptive, zur Energieaufnahme bei einer Kollision ausgebildete Crashstrukturen 13 auf, von denen hier nur einige beispielhaft gezeigt sind. Die Crashstrukturen 13 können zur Aufnahme verschiedener Mengen an Kollisionsenergie eingestellt werden, um so lokal ein "weicheres" oder "härteres" Kollisionsverhalten des Kraftfahrzeugs 1 zu realisieren. Die adaptiven Crashstrukturen können, wie es im Stand der Technik grundsätzlich bekannt ist, realisiert werden; es können verschiedene Arten von adaptiven Crashstrukturen eingesetzt werden, beispielsweise solche mit einem Deformationselement, bei denen die Aufnahme von Kollisionsenergie durch Deformation des Deformationselements erfolgt. Selbstverständlich sind auch andere Ausgestaltungen denkbar, beispielsweise adaptierbare Crashboxen und dergleichen, wobei es im Übrigen auch denkbar ist, nicht adaptive Crashstrukturen zusätzlich im Kraftfahrzeug 1 vorzusehen.

Die Auswertung von Sensordaten der Radarsensoren 2 sowie die Ansteuerung der adaptiven Crashstrukturen 13 erfolgt durch ein Steuergerät 14 eines Sicherheitssystems 15, welches zur Durchführung des erfindungsgemäßen Verfahrens ausgebildet ist. Selbstverständlich kann das Kraftfahrzeug auch weitere Umgebungssensoren, welche hier nicht näher dargestellt sind, umfassen, beispielsweise Kameras, Ultraschallsensoren, LIDAR-Sensoren und dergleichen, deren Sensordaten ebenso durch das Steuergerät 14 empfangen und verwertet werden können wie sonstige, von anderen Fahrzeugsystemen erhaltene Informationen. Die Sensordaten der verschiedenen Umgebungssensoren, insbesondere also auch der Radarsensoren 2, können in einem Umfeldmodell zusammengefasst werden.

Wesentlich ist, dass durch die spezielle Wahl von hochintegrierten, hochgenau und hochauflösend messenden Radarsensoren 2 neben Informationen zum Abstand, zur Relativgeschwindigkeit und zur Bewegungsrichtung von Objekten im Umfeld des Kraftfahrzeugs 1 auch deren äußere Form, Ausdehnung und Orientierung aus den Sensordaten der Radarsensoren 2 ermittelt werden kann. Stellt das Steuergerät 14 nun eine unvermeidbare Kollision fest, werden unter Nutzung der Radarsensoren 2 zu dem Kollisionsobjekt als Objektinformationen auch dessen äußere Form, Ausdehnung und Orientierung bestimmt. Nachdem zudem die dynamischen Größen sowie die Eigenschaften des eigenen Kraftfahrzeugs 1 bekannt sind, lässt sich nicht nur die Tatsache der unvermeidbaren Kollision und eine Objektklasse des Kollisionsobjekts ermitteln, sondern auch, wie und wo die Kollision stattfinden wird. Mithin werden die Objektinformationen im Steuergerät 14 genutzt, um den Auftreffbereich am eigenen Kraftfahrzeug 1 und die Auftreffart beschreibende Kollisionsinformationen zu ermitteln, wobei vorliegend insbesondere neben der Kollisionsrichtung auch eine Kollisionsfläche sowie die Form des kollidierenden Anteils des Kollisionsobjekts ermittelt werden. Diese Kollisionsinformation wird berücksichtigt, wenn die adaptiven Crashstrukturen 13 vor der Kollision eingestellt werden sollen, das bedeutet, bereits bevor die Kollision begonnen hat, können die Crashstrukturen 13 optimal zur Kollisionsfolgenminderung, insbesondere zum Insassenschutz, auf die bevorstehende Kollision eingestellt werden, was durch die hochqualitativen Sensordaten der Radarsensoren 2 ermöglicht wird.

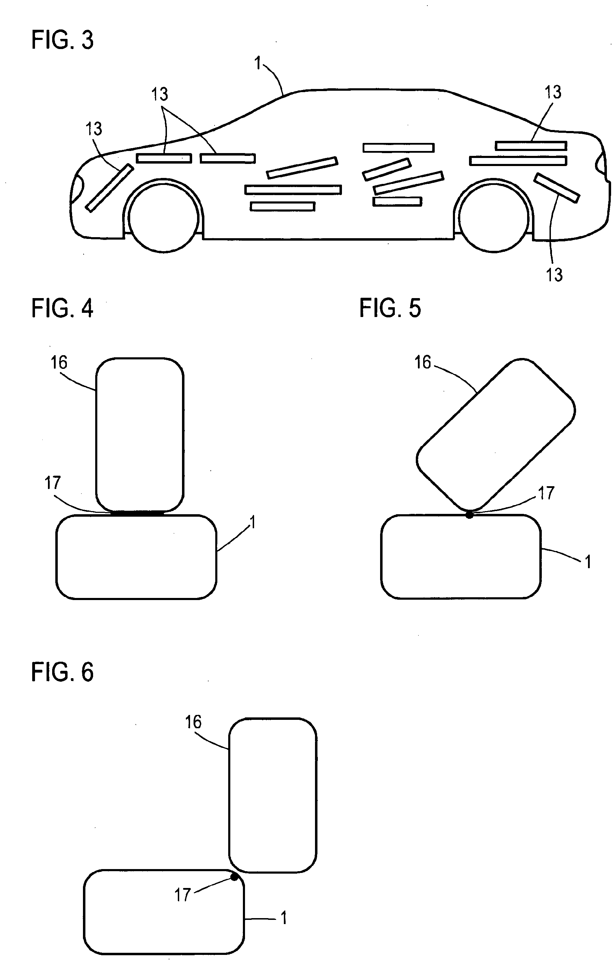

Fig. 3 zeigt schematisch nochmals genauer eine mögliche Anordnung von adaptiven Crashstrukturen 13 innerhalb des Kraftfahrzeugs 1 in einer Seitenansicht.

Die Figuren 4 - 6 zeigen nun beispielhaft mögliche Kollisionssituationen, die sich aufgrund der Sensordaten der Radarsensoren 2 äußerst genau vorausberechnen lassen, was die Auftreffart und den Auftreffbereich eines Kollisionsobjekts 16 auf das Kraftfahrzeug 1 angeht.

Fig. 4 zeigt einen Fall, in dem das Kollisionsobjekt 16, hier ein weiteres Kraftfahrzeug, frontal seitlich auf das Kraftfahrzeug 1 auftrifft. Das bedeutet, es ergibt sich eine äußerst große Kollisionsfläche 17, die die Karosserie des Kraftfahrzeugs 1 flächig beaufschlagt. Zum Schutz der Insassen können in diesem Beispiel die im Auftreffbereich, der durch die Kollisionsfläche 17 beschrieben wird, liegende Crashstrukturen 13 auf eine recht niedrige aufzunehmende Kollisionsenergie eingestellt werden, nachdem sich die gesamte Kollisionsenergie breit verteilt und die Insassen durch eine entsprechende Steifigkeit und Integrität der Fahrgastzelle zu schützen sind.

Fig. 5 zeigt eine weitere Kollisionssituation, in der das Kollisionsobjekt 16 schräg auf das Kraftfahrzeug 1 auftrifft, mithin zunächst ein nahezu punktueller Kontakt auftritt, das bedeutet, die Kollisionsfläche 17 ist zunächst eher klein.

Aus der Form des Kollisionsobjekts 16 ergibt sich jedoch auch die Form des auftreffenden Anteils, aus der ersichtlich wird, dass sich das Kollisionsobjekt 16 vermutlich in das Kraftfahrzeug 1 hineinschieben wird und sich die effektive Kollisionsfläche mit der Zeit erhöhen wird. Je nachdem, ob der ursprüngliche Auftreffpunkt noch im Bereich der Fahrgastzelle liegt, wo Insassen geschützt werden sollen, kann also eine dortige Crashstruktur eher auf eine große oder eine geringe aufzunehmende Kollisionsenergie eingestellt werden; benachbarte Crashstrukturen können ebenfalls geeignet eingestellt werden, da sie im weiteren Kollisionsverlauf ebenso beaufschlagt werden.

Einen weiteren möglichen Fall einer Kollision zeigt Fig. 6, in der das Kollisionsobjekt 16 im Heckbereich des Kraftfahrzeugs 1 punktuell auftrifft. Nachdem zudem die Kollisionsrichtung nach unten verläuft, können Crashstrukturen 13 hier äußerst weich eingestellt werden, da zumindest Insassen des Kraftfahrzeugs 1 weniger gefährdet sind und so ein Großteil der Kollisionsenergie im Heckbereich vernichtet werden kann.

## Patentansprüche

1. Verfahren zum Betrieb eines Sicherheitssystems (15) eines Kraftfahrzeugs (1) mit wenigstens einer bezüglich ihrer Steifigkeit adaptiven, zur Energieaufnahme bei einer Kollision ausgebildeten Crashstruktur (13), wobei im Vorfeld einer detektierten, bevorstehenden Kollision Sensordaten wenigstens eines Umgebungssensors des Kraftfahrzeugs (1) zur Ermittlung einer die Kollision beschreibenden Kollisionsinformation ausgewertet werden und die wenigstens eine Crashstruktur (13) in Abhängigkeit von der Kollisionsinformation eingestellt wird, wobei als Umgebungssensor wenigstens ein Radarsensor (2) mit einem als Halbleiterchip (8) realisierten Radartransceiver (10) verwendet wird, aus dessen Sensordaten eine äußere Form, eine Ausdehnung und eine Orientierung eines an der Kollision beteiligten Kollisionsobjekts (16) beschreibende Objektinformationen ermittelt werden, wobei unter Berücksichtigung der Objektinformationen eine den Auftreffbereich und/oder die Auftreffart beschreibende Kollisionsinformation ermittelt wird, wobei als Kollisionsinformation sowohl eine Kollisionsfläche (17) und/oder eine Kollisionsrichtung als auch eine Form des kollidierenden Anteils des Kollisionsobjekts (16) ermittelt werden.

2. Verfahren nach Anspruch 1,
**dadurch gekennzeichnet,**
**dass** unter Berücksichtigung der Sensordaten des Radarsensors (2) ferner eine aktuelle Geschwindigkeit und/oder ein Abstand und/oder eine Bewegungsrichtung des Kollisionsobjekts (16) ermittelt werden, welche ebenso bei der Ermittlung der Kollisionsinformation berücksichtigt werden.

3. Verfahren nach Anspruch 1 oder 2,
**dadurch gekennzeichnet,**
**dass** durch den Halbleiterchip (8) aus eine Steuereinheit (11) und/oder eine digitale Signalverarbeitungskomponente (12) des Radarsensors (2) realisiert werden und/oder der Halbleiterchip (8) gemeinsam mit einer Antennenanordnung (9) des Radarsensors (2) in einem Package (7) realisiert ist.

4. Verfahren nach einem der vorangehenden Ansprüche,
**dadurch gekennzeichnet,**
**dass** der Halbleiterchip als CMOS-Chip ausgebildet ist.

5. Verfahren nach einem der vorangehenden Ansprüche,
**dadurch gekennzeichnet,**
**dass** der Radarsensor (2) mit einer Frequenzbandbreite von mehr als 1 GHz, insbesondere 4 GHz, und/oder in einem Frequenzbereich von 77 bis 81 GHz und/oder mit einer Zykluszeit, die kleiner als 40 ms ist, betrieben wird.

6. Verfahren nach einem der vorangehenden Ansprüche,
**dadurch gekennzeichnet,**
**dass** mehrere, das gesamte Umfeld des Kraftfahrzeugs (1) in einem 360°-Winkelbereich abdeckende Radarsensoren (2) verwendet werden.

7. Verfahren nach Anspruch 6,
**dadurch gekennzeichnet,**
**dass** die Erfassungsbereiche (3) der Radarsensoren (2) wenigstens teilweise überlappen, wobei die Sensordaten mehrerer Radarsensoren (2) in Überlappungsbereichen (4) zur gegenseitigen Plausibilisierung und/oder Detektion von Messfehlern verwendet werden.

8. Verfahren nach einem der vorangehenden Ansprüche,
**dadurch gekennzeichnet,**
**dass** ein Objekte im Umfeld des Kraftfahrzeugs (1) beschreibendes Umfeldmodell verwendet wird.

9. Kraftfahrzeug (1), aufweisend wenigstens eine adaptive Crashstruktur (13) und ein die Crashstrukturen (13) ansteuerndes Sicherheitssystem (15) mit einem zur Durchführung eines Verfahrens nach einem der vorangehenden Ansprüche ausgebildeten Steuergerät (14).

## Claims

1. Method for operating a safety system (15) of a motor vehicle (1) having at least one crash structure (13) which is adaptive with respect to its rigidity and designed to absorb energy in the case of a collision, wherein prior to a detected imminent collision, sensor data of at least one environment sensor of the motor vehicle (1) are evaluated for determining an item of collision information describing the collision and the at least one crash structure (13) is set as a function of the item of collision information, wherein as an environment sensor at least one radar sensor (2) having a radar transceiver (10) realised as a semiconductor chip (8) is used, from the sensor data of which items of object information describing an external shape, an expansion and an orientation of a collision object (16) involved in the collision are determined, wherein an item of collision information describing the impact region and/or the type of impact is determined, taking into consideration items of object information, wherein as collision information both a collision surface (17) and/or a collision direction as well as a shape of the colliding part of the collision object (16) are determined.

2. Method according to claim 1,
**characterised in that**
taking into consideration the sensor data of the radar sensor (2), furthermore a current speed and/or a spacing and/or a direction of motion of the collision object (16) are determined, which are taken into consideration in the same way as in the determination of the collision information.

3. Method according to claim 1 or 2,
**characterised in that**
by means of the semiconductor chip (8) a controller (11) and/or a digital signal processing component (12) of the radar sensor (2) are realised and/or the semiconductor chip (8) together with an antenna assembly (9) of the radar sensor (2) is realised in one package (7).

4. Method according to any of the preceding claims,
**characterised in that**
the semiconductor chip is in the form of a CMOS chip.

5. Method according to any of the preceding claims,
**characterised in that**
the radar sensor (2) is operated with a frequency bandwidth of more than 1 GHz, in particular 4 GHz, and/or in a frequency range from 77 to 81 GHz and/or with a cycle time which is smaller than 40 ms.

6. Method according to any of the preceding claims,
**characterised in that**
several radar sensors (2) are used covering the entire environment of the motor vehicle (1) in a 360° angular range.

7. Method according to claim 6,
**characterised in that**
the detecting regions (3) of the radar sensors (2) overlap at least partially, wherein the sensor data of several radar sensors (2) in the overlapping regions (4) are used for the mutual plausibilisation and/or detection of measurement errors.

8. Method according to any of the preceding claims,
**characterised in that**
an environment model describing objects in the environment of the motor vehicle (1) is used.

9. Motor vehicle (1) having at least one adaptive crash structure (13) and a safety system (15) controlling the crash structures (13) having a controller (14) designed to carry out a method according to any of the preceding claims.

## Revendications

1. Procédé de fonctionnement d'un système de sécurité (15) d'un véhicule automobile (1) avec au moins une structure de collision (13) adaptative relativement à sa rigidité, réalisée pour l'absorption d'énergie lors d'une collision, dans lequel, avant une collision détectée et imminente, des données de capteur d'au moins un capteur d'environnement du véhicule automobile (1) sont évaluées pour déterminer une information de collision décrivant la collision et la au moins une structure de collision (13) est réglée en fonction de l'information de collision, dans lequel est utilisé en tant que capteur d'environnement au moins un capteur radar (2) avec un émetteur-récepteur radar (10) réalisé sous forme de puce semi-conductrice (8), à partir des données de capteur duquel sont déterminées des informations d'objet décrivant une forme extérieure, une extension et une orientation d'un objet de collision (16) impliqué dans la collision, dans lequel une information de collision décrivant la zone d'impact et/ou le type d'impact est déterminée en tenant compte des informations d'objet, dans lequel sont déterminées en tant qu'informations de collision aussi bien une surface de collision (17) et/ou une direction de collision qu'une forme de la partie de l'objet de collision (16) qui entre en collision.

2. Procédé selon la revendication 1,
**caractérisé en ce que**
en tenant compte des données de capteur du capteur radar (2), une vitesse actuelle et/ou une distance et/ou une direction de mouvement de l'objet de collision (16) sont en outre déterminées, lesquelles sont également prises en compte lors de la détermination de l'information de collision.

3. Procédé selon la revendication 1 ou 2,
**caractérisé en ce que**
une unité de commande (11) et/ou un composant de traitement de signal numérique (12) du capteur radar (2) sont réalisés par la puce à semi-conducteur (8) et/ou la puce à semi-conducteur (8) est réalisée conjointement avec un agencement d'antenne (9) du capteur radar (2) dans un boîtier (7).

4. Procédé selon l'une quelconque des revendications précédentes,
**caractérisé en ce que**
la puce semi-conductrice est conçue comme une puce CMOS.

5. Procédé selon l'une quelconque des revendications précédentes,
**caractérisé en ce que**
le capteur radar (2) est exploité avec une largeur de bande de fréquence supérieure à 1 GHz, en particulier 4 GHz, et/ou dans une plage de fréquence de 77 à 81 GHz et/ou avec un temps de cycle qui est inférieur à 40 ms.

6. Procédé selon l'une quelconque des revendications précédentes,
**caractérisé en ce que**
plusieurs capteurs radar (2) couvrant l'ensemble de l'environnement du véhicule automobile (1) dans une plage angulaire de 360° sont utilisés.

7. Procédé selon la revendication 6,
**caractérisé en ce que**
les zones de détection (3) des capteurs radar (2) se chevauchent au moins partiellement, dans lequel les données de capteur de plusieurs capteurs radar (2) sont utilisées dans des zones de chevauchement (4) pour une validation mutuelle et/ou une détection d'erreurs de mesure.

8. Procédé selon l'une quelconque des revendications précédentes,
**caractérisé en ce que**
un modèle d'environnement décrivant des objets dans l'environnement du véhicule automobile (1) est utilisé.

9. Véhicule automobile (1), présentant au moins une structure de collision adaptative (13) et un système de sécurité (15) commandant les structures de collision (13) avec un dispositif de commande (14) conçu pour la mise en oeuvre d'un procédé selon l'une quelconque des revendications précédentes.
